# FASCICULE DE BREVET EUROPEEN

(11) **EP 3 739 622 B1**
(45) Date de publication et mention de la délivrance du brevet: **16.09.2026**
(21) Numéro de dépôt: 20172288.1
(22) Date de dépôt: 30.04.2020
(51) Int. Cl.: H10W 42/40, H10W 44/00, G06K 19/073

(54) **PROCÉDÉ DE DÉTECTION D'UNE ATTEINTE ÉVENTUELLE À L'INTÉGRITÉ D'UN SUBSTRAT SEMI-CONDUCTEUR D'UN CIRCUIT INTÉGRÉ DEPUIS SA FACE ARRIÈRE, ET CIRCUIT INTÉGRÉ CORRESPONDANT**
VERFAHREN ZUR ERFASSUNG DER MÖGLICHEN VERLETZUNG DER INTEGRITÄT EINES HALBLEITERSUBSTRATS EINES INTEGRIERTEN SCHALTKREISES VON SEINER RÜCKSEITE AUS, UND ENTSPRECHENDER INTEGRIERTER SCHALTKREIS
METHOD OF DETECTING POSSIBLE DAMAGE TO THE INTEGRITY OF A SEMI-CONDUCTOR SUBSTRATE OF AN INTEGRATED CIRCUIT FROM THE REAR SURFACE THEREOF, AND CORRESPONDING INTEGRATED CIRCUIT

(30) Priorité: 13.05.2019 FR 1904942
(43) Date de publication de la demande: 18.11.2020
(73) Titulaire: STMicroelectronics (Rousset) SAS, 13790 Rousset (FR)
(72) Inventeur: SARAFIANOS, Alexandre, 83910 Pourrières (FR); MARINET, Fabrice, 13790 Châteauneuf-le-Rouge (FR); DELALLEAU, Julien, 13015 Marseille (FR)
(74) Mandataire: Casalonga

(56) Documents cités:
- FR-A1- 2 998 419
- FR-A1- 3 063 385
- US-A1- 2010 187 527
- US-A1- 2016 042 199

## Description

Des modes de réalisation et de mise en œuvre de l'invention concernent les circuits intégrés, et notamment la détection d'une éventuelle atteinte à l'intégrité du substrat d'un circuit intégré, en particulier une détection d'un amincissement éventuel du substrat.

Les circuits intégrés, en particulier ceux équipés de mémoires contenant des informations sensibles, doivent être autant que possible protégés contre les attaques, notamment les attaques visant à découvrir des données stockées.

Parmi les attaques possibles pour extraire des données confidentielles d'une mémoire d'un circuit intégré, par exemple une mémoire protégée d'une carte à puce, on peut citer des attaques dites par injection de faute (DFA, ou « Differential Fault Analysis ») qui prévoient de perturber le fonctionnement et/ou le contenu de la mémoire, ou encore de modifier le fonctionnement logique du circuit, par exemple au moyen d'un rayonnement (laser, infrarouge, rayons X, etc.) émis à travers la face arrière de la puce.

Ces attaques peuvent par exemple être effectuées au moyen d'une sonde ionique focalisée (FIB, « Focus Ion Beam » selon l'acronyme anglo-saxon usuel), utilisant un faisceau d'ions focalisé pour usiner ou déposer des matériaux à l'échelle nanométrique.

L'efficacité de ces attaques augmente lorsque le substrat du circuit intégré est aminci par l'attaquant, depuis sa face arrière de façon à se rapprocher le plus possible des composants du circuit intégré, réalisés au niveau de sa face avant.

Une étape liminaire d'un tel amincissement peut comprendre par exemple un polissage mécanique ou mécano-chimique depuis la face arrière.

Il est donc particulièrement utile de chercher à protéger le circuit intégré contre une attaque à partir de la face arrière du substrat.

Une solution a été proposée dans la demande de brevet français déposée sous le numéro 1851011 et publiée le 09.08.2019 avec le numéro FR3077678A1.

Cette solution prévoit notamment une mesure de la résistance verticale du substrat.

Bien qu'une telle solution donne satisfaction d'une manière générale, elle peut s'avérer moins efficace dans certains cas. En effet la détection d'un amincissement du substrat peut être perturbée par des variations de températures, de tension d'alimentation ou encore des variations de caractéristiques de composants d'un circuit intégré à un autre dues à des variations de procédé de fabrications.

Il peut alors en résulter parfois une absence de détection d'un amincissement du substrat en particulier pour des amincissements faibles.

Il existe en particulier un besoin de pouvoir détecter de façon simple et efficace un amincissement du substrat à partir de la face arrière et ce même si cet amincissement est faible.

Par ailleurs, le document FR 3 063 385 A1 porte sur la détection d'un éventuel amincissement du substrat d'un circuit intégré depuis sa face arrière. Il décrit plus précisément un circuit intégré, comprenant un substrat semiconducteur ayant une face arrière et une face avant et incluant un ensemble d'au moins un caisson semiconducteur électriquement isolé du reste du substrat, et un dispositif de détection d'un amincissement du substrat par sa face arrière. Le dispositif comporte un groupe d'au moins une première tranchée s'étendant dans ledit au moins un caisson entre deux endroits de sa périphérie et depuis ladite face avant jusqu'à un emplacement situé à distance du fond dudit au moins un caisson, ladite au moins une première tranchée étant électriquement isolée du caisson, et des moyens de détection configurés pour mesurer une grandeur physique représentative de la résistance électrique du caisson entre deux zones de contact respectivement situées de part et d'autre dudit groupe d'au moins une première tranchée.

Selon l'invention revendiquée, il est proposé un procédé de détection d'une atteinte éventuelle à l'intégrité d'un circuit intégré comportant un substrat semiconducteur ayant une face avant et une face arrière.

Le procédé selon cet aspect comprend une détection d'un amincissement éventuel du substrat à partir de la face arrière.

Cette détection de l'amincissement éventuel comprend une première mesure d'une valeur résistive du substrat entre au moins une première prise de contact, au moins une deuxième prise de contact, espacées et situées au niveau de la face avant, et une plaque électriquement conductrice située sur la face arrière.

Cette plaque électriquement conductrice peut être la plaque initialement fixée sur la face arrière du substrat lors de la fabrication du circuit intégré, dans le cas où aucune atteinte à l'intégrité du circuit intégré n'a été commise, en particulier aucun amincissement du substrat.

Cela étant, pour procéder à un amincissement du substrat, un attaquant va en général soit retirer totalement la plaque initiale, soit en retirer localement une partie, de façon à amincir le substrat à partir de la partie découverte voire de la totalité de la face arrière du substrat.

La plaque électriquement conductrice peut alors être soit la plaque initiale avec une partie retirée, soit la plaque initiale retirée puis recollée par l'attaquant après l'amincissement du substrat, soit une autre plaque électriquement conductrice recollée par l'attaquant après l'amincissement du substrat.

Lors de cette première mesure, on prend en compte à la fois la résistance verticale du substrat entre la première prise de contact et la plaque, et la résistance latérale du substrat entre les deux prises de contact.

Ceci permet une plus grande sensibilité de mesure et permet de détecter plus facilement un faible amincissement du substrat, par rapport à une mesure de la résistance verticale du substrat uniquement.

Cette mesure peut alors être comparée à au moins un seuil correspondant à une valeur résistive nominale, c'est-à-dire à un substrat non aminci.

Par « prise de contact » on entend par exemple des prises de contact substrat classiquement présentes dans les réalisations de circuits intégrés et par exemple dédiées à la polarisation du substrat.

Ces prises de contact peuvent être réalisées par des implantations de régions surdopées.

Selon l'invention revendiquée, ladite mesure de la valeur résistive du substrat comprend une application d'une différence de tension entre ladite au moins une première prise de contact et ladite plaque, et une mesure au niveau de ladite au moins une deuxième prise de contact d'un courant résultant de cette différence de tension.

La mesure du courant est une façon simple de mesurer la valeur résistive du substrat, et du fait de la prise en compte simultanée de ladite résistance verticale et de ladite résistance latérale, la variation de courant entre un substrat non aminci et un substrat aminci, même faiblement, est significative.

Là encore on peut comparer la valeur mesurée du courant à au moins une valeur seuil correspondant à une valeur nominale de courant, c'est-à-dire à un substrat non aminci.

Il est par ailleurs préférable que l'espace entre ladite au moins une première prise de contact et ladite au moins une deuxième prise de contact soit au moins égale à la moitié de l'épaisseur du substrat avant amincissement éventuel, par exemple de l'ordre de cette épaisseur.

Ceci permet d'accroître la sensibilité de la mesure (entre un substrat non aminci et un substrat aminci).

De façon à apporter une protection plus efficace contre une atteinte à l'intégrité du circuit intégré par amincissement du substrat, il est avantageux de prévoir un premier groupe de plusieurs premières prises de contact réparties sur ladite face avant et un deuxième groupe de plusieurs deuxièmes prises de contact réparties sur ladite face avant.

La première mesure est alors avantageusement effectuée entre le premier groupe de plusieurs premières prises de contact, le deuxième groupe de plusieurs deuxièmes prises de contact et ladite plaque électriquement conductrice.

A cet égard une première mesure entre le premier groupe, le deuxième groupe, et la plaque peut s'entendre de différentes façons.

Selon une première façon, on peut par exemple relier ensemble électriquement toutes les premières prises de contact, relier ensemble électriquement toutes les deuxièmes prises de contact, et effectuer une seule fois ladite première mesure, et comparer le résultat de la première mesure à une valeur seuil.

Dans ce cas le nombre de premières prises de contact peut être identique ou différent du nombre de deuxièmes prises de contact.

La mesure résistive du substrat effectuée sur plusieurs prises de contact correspond à une mesure de la valeur résistive équivalente de plusieurs résistances connectées en parallèle. La valeur résistive nominale décroît ainsi en 1/N où N est le nombre de résistances en parallèle.

Le nombre N de premières et de deuxièmes prises de contact est avantageusement choisi de façon à ce que la valeur résistive nominale correspondante permette de détecter facilement une variation de la valeur résistive mesurée résultant d'un amincissement même faible du substrat.

L'homme du métier saura choisir le nombre N en fonction notamment de la nature du substrat et de ses dimensions.

A titre indicatif, pour un substrat classique en silicium de surface 1×1 mm², on pourra prendre N de l'ordre de 500.

Selon une deuxième façon, on peut ne pas relier électriquement les premières prises de contact entre elles, ne pas relier électriquement les deuxièmes prises de contact entre elles, effectuer la première mesure séquentiellement en considérant à chaque fois une paire différente de prises de contact (première et deuxième), et comparer à chaque fois le résultat de la mesure correspondante à une valeur seuil.

Cette valeur seuil peut être identique à chaque pas ou différente en fonction par exemple de la structure du circuit intégré et/ou de l'emplacement des différentes paires.

Selon une troisième façon, intermédiaire entre la première façon et la deuxième façon, on peut relier électriquement les premières prises de contact par premiers groupes, relier électriquement les deuxièmes prises de contact par deuxièmes groupes, effectuer la première mesure séquentiellement en considérant à chaque fois une paire différente de groupes de prises de contact (premier et deuxième), et comparer à chaque fois le résultat de la mesure correspondante à une valeur seuil.

Le nombre de premières prises de contact peut être identique ou différent d'un premier groupe à l'autre.

Le nombre de deuxièmes prises de contact peut être identique ou différent d'un deuxième groupe à l'autre.

Et dans une paire d'un premier et d'un deuxième groupe, utilisée pour ladite mesure, le nombre de prises de contact des premier et deuxième groupes peut être identique ou différent.

Là encore la valeur seuil peut être identique à chaque pas ou différente en fonction par exemple de la structure du circuit intégré et/ou de l'emplacement des différents groupes.

L'homme du métier saura choisir entre les différentes façons de faire la première mesure en fonction par exemple de la résistivité du substrat et/ou de la structure du circuit intégré.

De même, l'homme du métier saura ajuster les différentes valeurs seuil en fonction par exemple de la résistivité du substrat et/ou de l'emplacement des prises de contacts considérées.

Selon un mode de mise en œuvre, il est avantageux que la détection de l'atteinte à l'intégrité du circuit intégré comprenne en outre, préalablement à la détection de l'amincissement du substrat, une détection d'un retrait éventuel d'au moins une partie de la plaque électriquement conductrice.

Cette détection du retrait éventuel d'au moins une partie de la plaque peut comprendre une mesure préalable d'une valeur résistive du substrat entre ladite au moins une première prise de contact et ladite plaque.

En d'autres termes, on ne prend pas en compte ici la résistance latérale du substrat mais uniquement la résistance verticale du substrat entre la première prise de contact et la plaque.

Et si la plaque est par exemple retirée localement à l'aplomb de la première prise de contact, alors la résistance verticale mesurée devient très grande.

Cette mesure préalable d'une valeur résistive du substrat entre ladite au moins une première prise de contact et ladite plaque comprend avantageusement une application d'une différence de tension entre ladite au moins une première prise de contact et ladite plaque et une mesure au niveau de ladite au moins une première prise de contact d'un courant résultant de cette différence de tension.

Et si la plaque est par exemple retirée localement à l'aplomb de la première prise de contact, alors la valeur mesurée du courant devient très faible.

La comparaison du de la valeur mesurée du courant à au moins un seuil permet de détecter le retrait au moins local de la plaque électriquement conductrice.

Là encore, de façon à apporter une protection plus efficace contre une atteinte à l'intégrité du circuit intégré par retrait au moins local de la plaque électriquement conductrice, il est avantageux d'utiliser le premier groupe de plusieurs premières prises de contact réparties sur ladite face avant.

La mesure préalable est alors avantageusement effectuée entre le premier groupe et ladite plaque électriquement conductrice.

Cette mesure préalable peut également être effectuée globalement ou séquentiellement.

Selon un autre aspect de l'invention revendiquée, il est proposé un circuit intégré comprenant
- un substrat semiconducteur ayant une face avant et une face arrière,
- au moins une première prise de contact, au moins une deuxième prise de contact, espacées situées au niveau de la face avant,
- une plaque électriquement conductrice située sur la face arrière, et
- des premiers moyens de détection configurés pour détecter un amincissement éventuel du substrat à partir de la face arrière, lesdits premiers moyens de détection comportant des premiers moyens de mesure configurés pour effectuer une première mesure d'une valeur résistive du substrat entre ladite au moins une première prise de contact, ladite au moins une deuxième prise de contact et ladite plaque électriquement conductrice.

Les premiers moyens de mesure sont configurés pour appliquer une différence de tension entre ladite au moins une première prise de contact et ladite plaque, et pour effectuer une mesure au niveau de ladite au moins une deuxième prise de contact d'un courant résultant de cette différence de tension.

Selon un mode de réalisation, l'espace entre ladite au moins une première prise de contact et ladite au moins une deuxième prise de contact est au moins égale à l'épaisseur du substrat avant amincissement éventuel.

Selon un mode de réalisation, le circuit intégré comprend
- un premier groupe de plusieurs premières prises de contact réparties sur ladite face avant,
- un deuxième groupe de plusieurs deuxièmes prises de contact réparties sur ladite face avant, et
- les premiers moyens de mesure sont configurés pour effectuer la première mesure entre le premier groupe, le deuxième groupe et ladite plaque électriquement conductrice.

Selon une variante, le circuit intégré comprend en outre des deuxièmes moyens de détection configurés pour, préalablement à la détection de l'amincissement du substrat, effectuer une détection d'un retrait éventuel d'au moins une partie de la plaque électriquement conductrice.

Selon un mode de réalisation les deuxièmes moyens de détection comprennent des deuxièmes moyens de mesure configurés pour effectuer une mesure préalable d'une valeur résistive du substrat entre ladite au moins une première prise de contact et ladite plaque.

Selon un mode de réalisation, les deuxièmes moyens de mesure sont configurés pour effectuer une application d'une différence de tension entre ladite au moins une première prise de contact et ladite plaque et pour effectuer une mesure au niveau de ladite au moins une première prise de contact d'un courant résultant de cette différence de tension.

Selon un mode de réalisation, les deuxièmes moyens de mesure sont configurés pour effectuer ladite mesure préalable entre ledit premier groupe et ladite plaque électriquement conductrice.

Selon un autre aspect de l'invention revendiquée, il est proposé un appareil électronique, par exemple une carte à puce, comportant un circuit intégré tel que défini ci-avant.

D'autres avantages et caractéristiques de l'invention apparaîtront à l'examen de la description détaillée de modes de mise en œuvre et de réalisation de l'invention, nullement limitatifs, et des dessins annexés sur lesquels :
[Fig 1] représente une vue en coupe d'un circuit intégré équipant une carte à puce
[Fig 2] illustre schématiquement un mode de réalisation de l'invention
[Fig 3] illustre schématiquement un autre mode de réalisation de l'invention
[Fig 4] illustre schématiquement un autre mode de réalisation de l'invention
[Fig 5] illustre schématiquement un mode de mise en œuvre de l'invention
[Fig 6] illustre schématiquement un mode de mise en œuvre de l'invention, et
[Fig 7] illustre schématiquement un mode de mise en œuvre de l'invention.

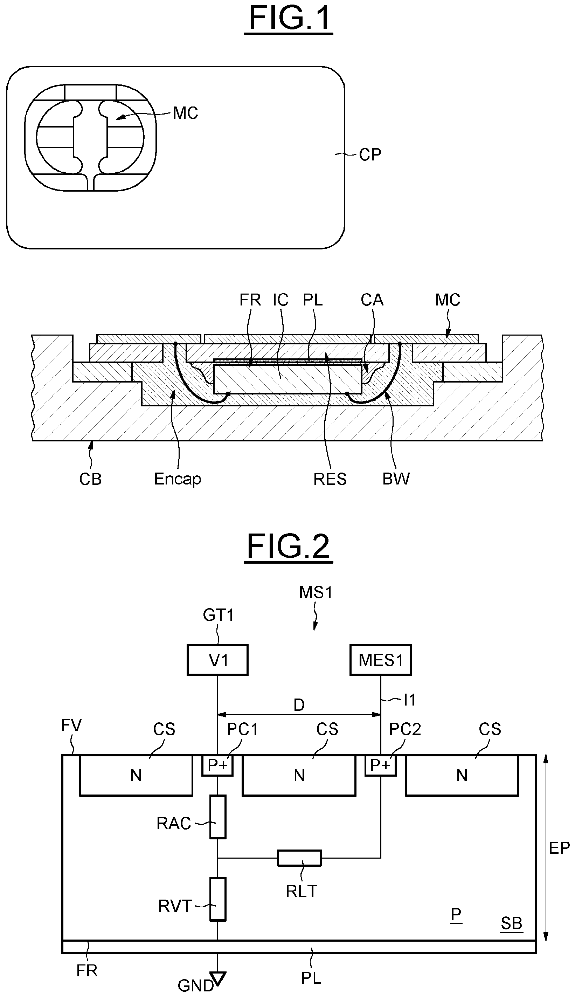

La figure 1 représente un exemple de circuit intégré IC équipant une carte à puce CP.

Une carte à puce CP typique est illustrée schématiquement sur le haut de la figure 1. Le circuit intégré IC est assemblé dans le corps de carte CB de la carte à puce CP, sous des contacts MC. Une coupe de cet assemblage est représentée sur le bas de la figure 1.

Le circuit intégré IC comprend classiquement un substrat semiconducteur surmonté par une partie d'interconnexion (BEOL : Back End Of Lines).

Le circuit intégré IC est recouvert d'une plaque électriquement conductrice PL. Cette plaque est collée sur la face arrière FR dudit substrat par une couche conductrice adhésive CA et le rattache à une face d'un socle en résine RES.

Le socle en résine RES supporte sur sa face opposée des contacts MC dédiés à assurer les connexions du circuit intégré IC avec un terminal tel qu'un lecteur de cartes.

Le circuit intégré IC est encapsulé dans une couche d'encapsulation isolante Encap.

La couche d'encapsulation isolante Encap est elle-même encapsulée dans un corps de carte CB.

Les connexions entre les contacts MC et le circuit intégré IC sont réalisées au moyen de fils BW, dans une configuration typique de puce retournée (« Flip chip » selon le vocable anglosaxon usuel), les fils BW étant soudés d'une part auxdits contacts MC, et d'autre part à des plots de contact (« pads » en langue anglaise) formés sur le dernier niveau de métallisation de la partie d'interconnexion.

L'ensemble formé par la plaque électriquement conductrice PL, la couche conductrice adhésive CA et la résine RES, forme un enrobage du circuit intégré IC.

Cela n'exclut pas la possibilité d'utiliser d'autres enrobages connus dans le domaine des circuits intégrés, par exemple adaptés à une autre application qu'une carte à puce.

La figure 2 représente un exemple de mode de réalisation du circuit intégré IC.

Le circuit intégré IC comporte un substrat semiconducteur ayant une face avant FV, la face arrière FR et des prises de contact PCi, réparties au niveau de la face avant FV et dont on en représenté ici seulement une première PC1 et une deuxième PC2.

Typiquement, le substrat semiconducteur inclut des caissons semiconducteurs CS de type de conductivité N électriquement isolés du reste du substrat qui est ici de type de conductivité P.

Les prises de contact PC1 et PC2 comportent des régions surdopées de type P+.

Par exemple, pour extraire des données confidentielles d'une mémoire du circuit intégré, un attaquant a besoin d'amincir le substrat afin de se rapprocher le plus possible des composants du circuit intégré, réalisés au niveau de sa face avant.

Un tel amincissement peut comprendre par exemple un polissage mécano-chimique depuis la face arrière, et/ou un usinage par exemple via une sonde ionique focalisée FIB.

Pour procéder à l'amincissement l'attaquant peut retirer localement une partie de la plaque initiale, ou bien la plaque initiale entière.

Après l'amincissement, l'attaquant peut laisser la plaque initiale partiellement retirée, redéposer la plaque électriquement conductrice initiale PL ou une autre plaque PL sur la face arrière FR.

Le circuit intégré comporte alors avantageusement également des premiers moyens de détection configurés pour détecter un amincissement éventuel du substrat à partir de la face arrière FR.

Ces premiers moyens de détection comportent ici des premiers moyens de mesure MS1 configurés pour effectuer une première mesure d'une valeur résistive du substrat entre la première prise de contact PC1, la deuxième prise de contact PC2 et ladite plaque électriquement conductrice PL.

La résistance qui va être mesurée comporte donc une résistance d'accès RAC, une résistance verticale RVT entre la résistance d'accès et la plaque électriquement conductrice PL ainsi qu'une résistance latérale entre les deux prises de contact PC1 et PC2.

Bien que la représentation de la résistance d'accès sur la figure 2 ait été volontairement exagérée à des fins de clarté, cette résistance d'accès représente la résistance du volume de substrat situé entre la face avant FV et les bords des caissons CS adjacents.

Les premiers moyens de mesure MS1 comportent un circuit GT1 configuré pour appliquer une première tension V1 sur la prise de contact PC1 tandis que la plaque PL est destinée à être mise à la masse GND.

La mesure de la valeur résistive du substrat va être obtenue ici par la mesure du courant I1 au niveau de la deuxième prise de contact PC2, ce premier courant I1 résultant de la différence de tension V1-0.

A cet égard, les premiers moyens de mesure comportent un premier circuit de mesure MES1, de structure classique et connue en soi, destiné à mesurer le courant I1 et à le comparer à au moins un seuil.

Ce seuil correspond par exemple à une valeur nominale de courant obtenue pour un substrat non aminci.

La mesure du courant est une façon simple de mesurer la valeur résistive du substrat et du fait de la prise en compte simultanée de la résistance verticale et de la résistance latérale, la variation de courant entre un substrat non aminci et un substrat aminci, même faiblement, est significative.

Les deux prises de contact PC1 et PC2 sont espacées d'une distance D.

Bien que cela ne soit pas indispensable, il est préférable que cette distance D soit de l'ordre de l'épaisseur EP du substrat avant amincissement éventuel. Ceci permet d'accroître la sensibilité de la mesure entre un substrat non aminci et un substrat aminci.

A titre indicatif, pour un substrat d'épaisseur 150 micromètres, cette distance D sera avantageusement au moins égale à 75 micromètres, par exemple de l'ordre de 150 micromètres.

A titre d'exemple, pour un substrat d'épaisseur nominale EP égale à 150 micromètres et un espacement D de 150 micromètres entre les prises de contact PC1 et PC2, on obtient un courant nominal I1 correspondant à un substrat non aminci de l'ordre de 10 microampères.

Et, à titre d'exemple, pour un amincissement de l'ordre de 40 micromètres, on obtient un courant I1 supérieur à 100 microampères.

Il est également avantageux que la détection de l'atteinte éventuelle à l'intégrité du circuit intégré comprenne en outre, préalablement à la détection de l'amincissement éventuel du substrat, une détection d'un retrait éventuel d'au moins une partie de la plaque électriquement conductrice PL.

Cette détection du retrait éventuel au moins local de la plaque peut alors comprendre une mesure préalable d'une valeur résistive du substrat entre la première prise de contact et la plaque.

En d'autres termes, on ne prend pas en compte alors la résistance latérale du substrat mais uniquement la somme de la résistance d'accès et de la résistance verticale du substrat, entre la première prise de contact PC1 et la plaque PL.

Et, si la plaque est par exemple retirée localement à l'aplomb de la première prise de contact, alors cette résistance mesurée devient très grande.

Et, en termes de courant, si la plaque est par exemple retirée localement à l'aplomb de la première prise de contact PC1 alors la valeur mesurée du courant devient très faible.

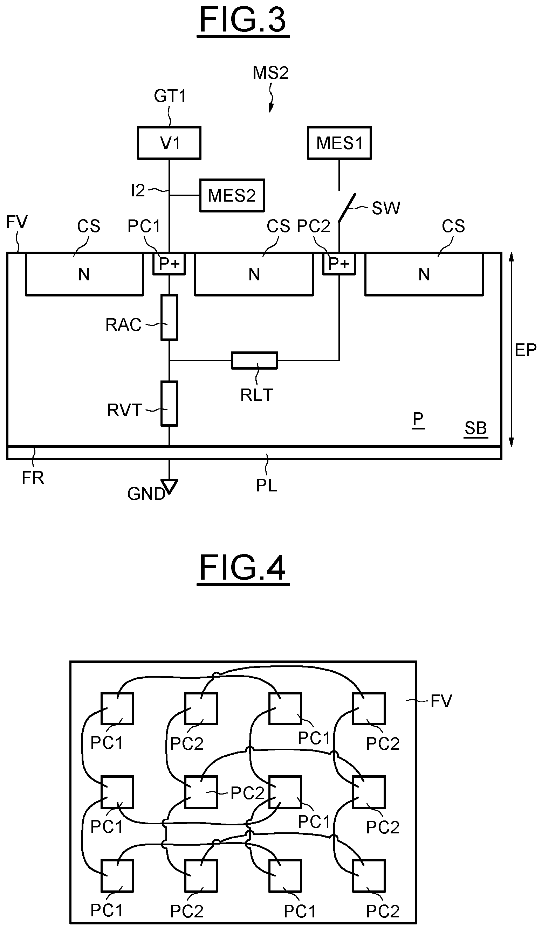

D'un point de vue matériel, le circuit intégré peut comporter à cet égard, comme illustré schématiquement sur la figure 3, des deuxièmes moyens de détection MS2 configurés pour, préalablement à la détection de l'amincissement du substrat, effectuer la détection d'un retrait éventuel d'au moins une partie de la plaque électriquement conductrice PL.

Plus précisément, on peut par exemple, prévoir un interrupteur SW permettant, pour effectuer cette mesure préalable, de déconnecter le circuit de mesure MES1 de la deuxième prise de contact PC2.

Les deuxièmes moyens de mesure MS2 comportent alors le circuit GT1 configuré pour appliquer la tension V1 sur la première prise de contact PC1, la plaque PL étant mise à la masse.

Les moyens de mesure MS2 comportent également un deuxième circuit de mesure MES2 par exemple de structure analogue au premier circuit de mesure MES1, et configuré pour mesurer le courant I2 résultant de la différence de tension V1-0 appliquée entre la prise de contact PC1 et la plaque PL.

Le circuit de mesure MES2 peut alors comparer ce courant I2 à un deuxième seuil pour détecter un retrait éventuel de la plaque PL.

Comme illustré sur la figure 4, de façon à apporter une protection plus efficace contre une atteinte à l'intégrité du circuit intégré par amincissement du substrat et/ou retrait au moins localisé de la plaque PL, il est avantageux de prévoir un premier groupe de plusieurs premières prises de contact PC1 réparties sur la face avant FV du circuit intégré, et un deuxième groupe de plusieurs deuxièmes prises de contact PC2 réparties sur ladite face avant FV.

Bien que cela ne soit pas la seule configuration possible, comme expliqué ci-avant, toutes les premières prises de contact PC1 sont électriquement reliées ensemble et toutes les deuxièmes prises de contact PC2 sont électriquement reliées ensemble dans l'exemple décrit ici.

La première mesure du courant I1, est alors avantageusement effectuée entre le premier groupe de prises de contact PC1, le deuxième groupe de prises de contact PC2 et la plaque électriquement conductrice PL.

De même, la deuxième mesure du courant I2 peut avantageusement être effectuée entre le premier groupe de plusieurs premières prises de contact PC1 et la plaque électriquement conductrice PL.

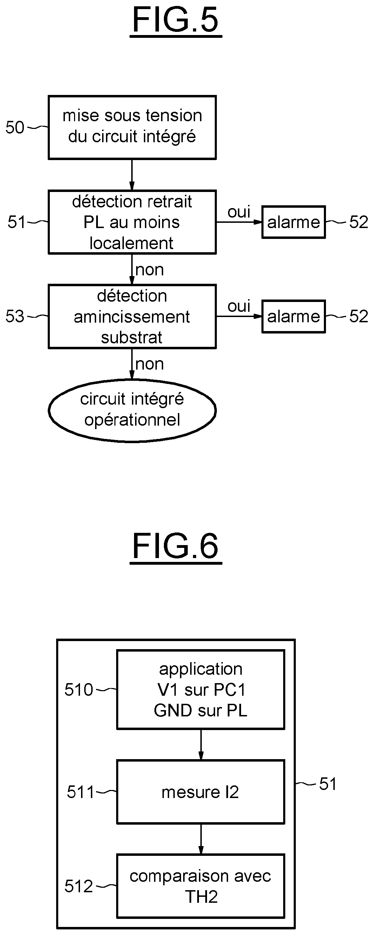

On se réfère maintenant plus particulièrement aux figures 5 à 7 pour illustrer des modes de mise en œuvre d'un procédé selon l'invention.

Sur la figure 5, après une mise sous tension 50 du circuit intégré, on détecte, dans l'étape 51, le retrait éventuel de la plaque semiconductrice PL au moins localement.

Si un retrait est effectivement détecté, alors on peut émettre un signal d'alarme.

Par « signal d'alarme » on entend par exemple un signal permettant de déclencher des moyens classiques de contre-mesures destinés à contrecarrer une telle attaque, voire de stopper le fonctionnement du circuit intégré.

Si on ne détecte pas de retrait au moins local de la plaque conductrice PL, alors on passe dans l'étape 53 dans laquelle on détecte un amincissement éventuel du substrat

Si un amincissement même minime du substrat est détecté, alors on repasse dans l'étape 52 d'émission du signal d'alarme.

Si par contre aucun amincissement du substrat n'est détecté, alors le circuit intégré est considéré comme opérationnel.

Ainsi qu'il a été déjà évoqué ci-avant, et comme illustré sur la figure 6, l'étape 51 de détection d'un retrait éventuel au moins local de la plaque PL peut comprendre une application 510 de la tension V1 sur la prise de contact PC1 et une application de la masse sur la plaque PL. L'interrupteur SW est ouvert.

On mesure ensuite le courant résultant I2 au niveau de la prise de contact PC1 (étape 511).

On compare ensuite ce courant I2 avec un seuil TH2 (étape 512) pour déterminer s'il y a eu retrait au moins local de la plaque PL.

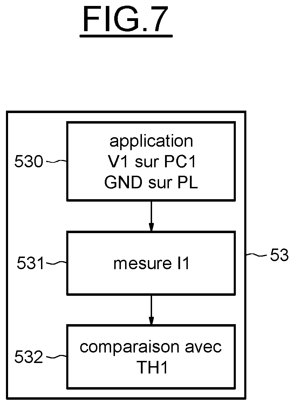

En ce qui concerne l'étape 53, comme illustré sur la figure 7, elle peut comprendre également une application de la tension V1 sur la prise de contact PC1 et une application de la masse sur la plaque PL (étape 530).

Cette application 530 est suivie de la mesure du courant I1 (étape 531) au niveau de la deuxième prise de contact PC2 (interrupteur SW fermé) puis d'une comparaison de ce courant I1 avec un autre seuil TH1 (étape 532).

## Revendications

1. Procédé de détection d'une atteinte éventuelle à l'intégrité d'un circuit intégré comportant un substrat semiconducteur (SB) ayant une face avant et une face arrière, le procédé comprenant une détection (53) d'un amincissement éventuel du substrat à partir de la face arrière, ladite détection de l'amincissement comprenant une première mesure d'une valeur résistive du substrat entre au moins une première prise de contact (PC1), au moins une deuxième prise de contact (PC2), espacées et situées au niveau de la face avant, et une plaque électriquement conductrice (PL) située sur la face arrière, le procédé étant tel que ladite première mesure de la valeur résistive du substrat comprend une application (530) d'une différence de tension entre ladite au moins une première prise de contact (PC1) et ladite plaque, et une mesure (531) au niveau de ladite au moins une deuxième prise de contact (PC2) d'un courant (I1) résultant de cette différence de tension.

2. Procédé selon la revendication 1, dans lequel l'espace (D) entre ladite au moins une première prise de contact et ladite au moins une deuxième prise de contact est au moins égale à la moitié de l'épaisseur (EP) du substrat avant amincissement éventuel.

3. Procédé selon l'une des revendications précédentes, dans lequel la première mesure est effectuée entre un premier groupe de plusieurs premières prises de contact (PC1) réparties sur ladite face avant, un deuxième groupe de plusieurs deuxièmes prises de contact (PC2) réparties sur ladite face avant, et ladite plaque électriquement conductrice (PL).

4. Procédé selon l'une des revendications précédentes, dans lequel la détection de l'atteinte éventuelle à l'intégrité du circuit intégré comprend en outre, préalablement à la détection (53) de l'amincissement éventuel du substrat, une détection (51) d'un retrait éventuel d'au moins une partie de la plaque électriquement conductrice.

5. Procédé selon la revendication 4, dans lequel la détection du retrait éventuel d'au moins une partie de la plaque comprend une mesure préalable d'une valeur résistive du substrat entre ladite au moins une première prise de contact (PC1) et ladite plaque (PL).

6. Procédé selon la revendication 5, dans lequel la mesure préalable d'une valeur résistive du substrat entre ladite au moins une première prise de contact et ladite plaque comprend une application (510) d'une différence de tension entre ladite au moins une première prise de contact et ladite plaque et une mesure (511) au niveau de ladite au moins une première prise de contact (PC1) d'un courant (I2) résultant de cette différence de tension.

7. Procédé selon la revendication 5 ou 6 prise en combinaison avec la revendication 3, dans lequel ladite mesure préalable est effectuée entre ledit premier groupe et ladite plaque électriquement conductrice (PL).

8. Circuit intégré comprenant un substrat semiconducteur (SB) ayant une face avant et une face arrière, au moins une première prise de contact (PC1), au moins une deuxième prise de contact (PC2), espacées situées au niveau de la face avant, et une plaque électriquement conductrice (PL) située sur la face arrière et des premiers moyens de détection (MS1) configurés pour détecter un amincissement éventuel du substrat à partir de la face arrière, lesdits premiers moyens de détection comportant des premiers moyens de mesure (MS1) configurés pour effectuer une première mesure d'une valeur résistive du substrat entre ladite au moins une première prise de contact (PC1), ladite au moins une deuxième prise de contact (PC2) et ladite plaque électriquement conductrice (PL) ;
dans lequel les premiers moyens de mesure (MS1) sont configurés pour appliquer une différence de tension entre ladite au moins une première prise de contact et ladite plaque, et pour effectuer une mesure au niveau de ladite au moins une deuxième prise de contact d'un courant (I1) résultant de cette différence de tension.

9. Circuit intégré selon la revendication 8, dans lequel l'espace (D) entre ladite au moins une première prise de contact et ladite au moins une deuxième prise de contact est au moins égale à la moitié de l'épaisseur (EP) du substrat avant amincissement éventuel.

10. Circuit intégré selon l'une des revendications 8 à 9, comprenant un premier groupe de plusieurs premières prises de contact (PC1) réparties sur ladite face avant, un deuxième groupe de plusieurs deuxièmes prises de contact (PC2) réparties sur ladite face avant, et les premiers moyens de mesure sont configurés pour effectuer la première mesure entre le premier groupe, le deuxième groupe et ladite plaque électriquement conductrice.

11. Circuit intégré selon l'une des revendications 8 à 10, comprenant en outre des deuxièmes moyens de détection (MS2) configurés pour, préalablement à la détection de l'amincissement éventuel du substrat, effectuer une détection d'un retrait éventuel d'au moins une partie de la plaque électriquement conductrice.

12. Circuit intégré selon la revendication 11, dans lequel les deuxièmes moyens de détection comprennent des deuxièmes moyens de mesure (MS2) configurés pour effectuer une mesure préalable d'une valeur résistive du substrat entre ladite au moins une première prise de contact et ladite plaque.

13. Circuit intégré selon la revendication 12, dans lequel les deuxièmes moyens de mesure (MS2) sont configurés pour effectuer une application d'une différence de tension entre ladite au moins une première prise de contact et ladite plaque et pour effectuer une mesure au niveau de ladite au moins une première prise de contact (PC1) d'un courant (I2) résultant de cette différence de tension.

14. Circuit intégré selon la revendication 12 ou 13 prise en combinaison avec la revendication 10, dans lequel les deuxièmes moyens de mesure sont configurés pour effectuer ladite mesure préalable entre ledit premier groupe et ladite plaque électriquement conductrice.

15. Appareil électronique, tel qu'une carte à puce (CP), comportant un circuit intégré (CI) selon l'une des revendications 8 à 14.

## Patentansprüche

1. Verfahren zum Erkennen einer möglichen Verletzung der Integrität einer integrierten Schaltung, die ein Halbleitersubstrat (SB) mit einer Vorderseite und einer Rückseite aufweist, wobei das Verfahren das Erkennen (53) einer möglichen Ausdünnung des Substrats von der Rückseite aus umfasst, wobei das Erkennen der Ausdünnung ein erstes Messen eines Widerstandswerts des Substrats zwischen mindestens einem ersten Kontaktpunkt (PC1), mindestens einem zweiten Kontaktpunkt (PC2), die voneinander beabstandet und auf der Vorderseite angeordnet sind, und einer elektrisch leitfähigen Platte (PL), die auf der Rückseite angeordnet ist, umfasst, wobei das Verfahren so ist, dass das erste Messen des Widerstandswerts des Substrats das Anlegen (530) eines Spannungsunterschieds zwischen dem mindestens einen ersten Kontaktpunkt (PC1) und der Platte sowie das Messen (531) eines aus diesem Spannungsunterschied resultierenden Stroms (I1) an dem mindestens einen zweiten Kontaktpunkt (PC2) umfasst.

2. Verfahren nach Anspruch 1, wobei der Abstand (D) zwischen dem mindestens einen ersten Kontaktpunkt und dem mindestens einen zweiten Kontaktpunkt mindestens der Hälfte der Dicke (EP) des Substrats vor einer eventuellen Ausdünnung entspricht.

3. Verfahren nach einem der vorhergehenden Ansprüche, wobei das erste Messen zwischen einer ersten Gruppe von mehreren ersten Kontaktpunkten (PC1), die auf der Vorderseite verteilt sind, einer zweiten Gruppe von mehreren zweiten Kontaktpunkten (PC2), die auf der Vorderseite verteilt sind, und der elektrisch leitfähigen Platte (PL) durchgeführt wird.

4. Verfahren nach einem der vorhergehenden Ansprüche, wobei das Erkennen der möglichen Verletzung der Integrität der integrierten Schaltung ferner vor dem Erkennen (53) der möglichen Ausdünnung des Substrats ein Erkennen (51) einer möglichen Entfernung mindestens eines Teils der elektrisch leitfähigen Platte umfasst.

5. Verfahren nach Anspruch 4, wobei das Erkennen des eventuellen Entfernens mindestens eines Teils der Platte ein vorheriges Messen eines Widerstandswerts des Substrats zwischen dem mindestens einen ersten Kontaktpunkt (PC1) und der Platte (PL) umfasst.

6. Verfahren nach Anspruch 5, wobei das vorherige Messen eines Widerstandswerts des Substrats zwischen dem mindestens einen ersten Kontaktpunkt und der Platte das Anlegen (510) eines Spannungsunterschieds zwischen dem mindestens einen ersten Kontaktpunkt und der Platte und das Messen (511) eines aus diesem Spannungsunterschied resultierenden Stroms (I2) an dem mindestens einen ersten Kontaktpunkt (PC1) umfasst.

7. Verfahren nach Anspruch 5 oder 6 in Kombination mit Anspruch 3, wobei das vorherige Messen zwischen der ersten Gruppe und der elektrisch leitfähigen Platte (PL) durchgeführt wird.

8. Integrierte Schaltung, umfassend ein Halbleitersubstrat (SB) mit einer Vorderseite und einer Rückseite, mindestens einem ersten Kontaktpunkt (PC1), mindestens einem zweiten Kontaktpunkt (PC2), die voneinander beabstandet und auf der Vorderseite angeordnet sind, und einer elektrisch leitfähigen Platte (PL), die auf der Rückseite angeordnet ist, und ersten Erkennungsmitteln (MS1), die so eingerichtet sind, dass sie eine eventuelle Ausdünnung des Substrats von der Rückseite aus erkennen, wobei die ersten Erkennungsmittel erste Messmittel (MS1) aufweisen, die so eingerichtet sind, dass sie ein erstes Messen eines Widerstandswerts des Substrats zwischen dem mindestens einen ersten Kontaktpunkt (PC1), dem mindestens einen zweiten Kontaktpunkt (PC2) und der elektrisch leitfähigen Platte (PL) durchführen;
wobei die ersten Messmittel (MS1) so eingerichtet sind, dass sie einen Spannungsunterschied zwischen dem mindestens einen ersten Kontaktpunkt und der Platte anlegen und an dem mindestens einen zweiten Kontaktpunkt ein Messen eines aus diesem Spannungsunterschied resultierenden Stroms (I1) durchführen.

9. Integrierte Schaltung nach Anspruch 8, wobei der Abstand (D) zwischen dem mindestens einen ersten Kontaktpunkt und dem mindestens einen zweiten Kontaktpunkt mindestens der Hälfte der Dicke (EP) des Substrats vor einer eventuellen Ausdünnung entspricht.

10. Integrierte Schaltung nach einem der Ansprüche 8 bis 9, umfassend eine erste Gruppe von mehreren ersten Kontaktpunkten (PC1), die auf der Vorderseite verteilt sind, und eine zweite Gruppe von mehreren zweiten Kontaktpunkten (PC2), die auf der Vorderseite verteilt sind, und wobei die ersten Messmittel so eingerichtet sind, dass sie das erste Messen zwischen der ersten Gruppe, der zweiten Gruppe und der elektrisch leitfähigen Platte durchführen.

11. Integrierte Schaltung nach einem der Ansprüche 8 bis 10, ferner umfassend zweite Erkennungsmittel (MS2), die so eingerichtet sind, dass sie vor dem Erkennen einer eventuellen Ausdünnung des Substrats ein Erkennen eines eventuellen Entfernens mindestens eines Teils der elektrisch leitfähigen Platte durchführen.

12. Integrierte Schaltung nach Anspruch 11, wobei die zweiten Erkennungsmittel zweite Messmittel (MS2) umfassen, die so eingerichtet sind, dass sie ein vorheriges Messen eines Widerstandswerts des Substrats zwischen dem mindestens einen ersten Kontaktpunkt und der Platte durchführen.

13. Integrierte Schaltung nach Anspruch 12, wobei die zweiten Messmittel (MS2) so eingerichtet sind, dass sie einen Spannungsunterschied zwischen dem mindestens einen ersten Kontaktpunkt und der Platte anlegen und an dem mindestens einen ersten Kontaktpunkt (PC1) ein Messen eines aus diesem Spannungsunterschied resultierenden Strom (I2) durchführen.

14. Integrierte Schaltung nach Anspruch 12 oder 13 in Kombination mit Anspruch 10, wobei die zweiten Messmittel so eingerichtet sind, dass sie das vorherige Messen zwischen der ersten Gruppe und der elektrisch leitfähigen Platte durchführen.

15. Elektronisches Gerät, wie eine Chipkarte (CP), mit einer integrierten Schaltung (IC) nach einem der Ansprüche 8 bis 14.

## Claims

1. Method for detecting a possible compromise of the integrity of an integrated circuit including a semiconductor substrate (SB) having a front face and a rear face, the method comprising detecting (53) a possible thinning of the substrate from the rear face, said detection of the thinning comprising a first measurement of a resistive value of the substrate between at least one first contact (PC1), at least one second contact (PC2), spaced apart and located on the front face, and an electrically conductive plate (PL) located on the rear face, the method being such that said first measurement of the resistive value of the substrate comprises applying (530) a voltage difference between said at least one first contact (PC1) and said plate, and measuring (531) at said at least one second contact (PC2) a current (I1) resulting from this voltage difference.

2. Method according to claim 1, wherein the space (D) between said at least one first contact and said at least one second contact is at least equal to half the thickness (EP) of the substrate before possible thinning.

3. Method according to one of the preceding claims, wherein the first measurement is carried out between a first group of several first contacts (PC1) distributed on said front face, a second group of several second contacts (PC2) distributed on said front face, and said electrically conductive plate (PL).

4. Method according to one of the preceding claims, wherein the detection of the possible compromise of the integrity of the integrated circuit further comprises, prior to the detection (53) of the possible thinning of the substrate, a detection (51) of a possible removal of at least a part of the electrically conductive plate.

5. Method according to claim 4, wherein the detection of the possible removal of at least a part of the plate comprises a prior measurement of a resistive value of the substrate between said at least one first contact (PC1) and said plate (PL).

6. Method according to claim 5, wherein the prior measurement of a resistive value of the substrate between said at least one first contact and said plate comprises applying (510) a voltage difference between said at least one first contact and said plate and measuring (511) at said at least one first contact (PC1) a current (I2) resulting from this voltage difference.

7. Method according to claim 5 or 6 taken in combination with claim 3, wherein said prior measurement is carried out between said first group and said electrically conductive plate (PL).

8. Integrated circuit comprising a semiconductor substrate (SB) having a front face and a rear face, at least one first contact (PC1), at least one second contact (PC2), spaced apart and located at the front face, and an electrically conductive plate (PL) located on the rear face and first detection means (MS1) configured to detect a possible thinning of the substrate from the rear face, said first detection means including first measurement means (MS1) configured to carry out a first measurement of a resistive value of the substrate between said at least one first contact (PC1), said at least one second contact (PC2) and said electrically conductive plate (PL);
wherein the first measurement means (MS1) are configured to apply a voltage difference between said at least one first contact and said plate, and to measure, at said at least one second contact, a current (I1) resulting from this voltage difference.

9. Integrated circuit according to claim 8, wherein the space (D) between said at least one first contact and said at least one second contact is at least equal to half the thickness (EP) of the substrate before possible thinning.

10. Integrated circuit according to one of claims 8 to 9, comprising a first group of several first contacts (PC1) distributed on said front face, a second group of several second contacts (PC2) distributed on said front face, and the first measurement means are configured to carry out the first measurement between the first group, the second group and said electrically conductive plate.

11. Integrated circuit according to one of claims 8 to 10, further comprising second detection means (MS2) configured to, prior to the detection of the possible thinning of the substrate, carry out a detection of a possible removal of at least a part of the electrically conductive plate.

12. Integrated circuit according to claim 11, wherein the second detection means comprise second measurement means (MS2) configured to carry out a prior measurement of a resistive value of the substrate between said at least one first contact and said plate.

13. Integrated circuit according to claim 12, wherein the second measurement means (MS2) are configured to apply a voltage difference between said at least one first contact and said plate and to measure at said at least one first contact (PC1) a current (I2) resulting from this voltage difference.

14. Integrated circuit according to claim 12 or 13 taken in combination with claim 10, wherein the second measurement means are configured to carry out said prior measurement between said first group and said electrically conductive plate.

15. Electronic device, such as a chip card (CP), including an integrated circuit (CI) according to one of claims 8 to 14.
